# EUROPEAN PATENT APPLICATION

(11) **EP 4 749 439 A1**
(43) Date of publication of application: **27.05.2026**
(21) Application number: 25218306.6
(22) Date of filing: 25.11.2025
(51) Int. Cl.: G06F 9/4401

(54) **METHOD FOR DYNAMICALLY ADJUSTING HARDWARE CONFIGURATION INSTRUCTION AND ELECTRONIC APPARATUS**

(30) Priority: 26.11.2024 TW 113145583
(71) Applicant: Acer Incorporated, New Taipei City 221 (TW)
(72) Inventor: WANG, Kuan-Chieh, New Taipei City 221 (TW); YANG, Chao-Kuang, New Taipei City 221 (TW); WANG, Chien-Shan, New Taipei City 221 (TW); LIU, Che-Ming, 221 New Taipei City 221 (TW)
(74) Representative: Haseltine Lake Kempner LLP

(57) **Abstract**

Provided are a method for dynamically adjusting hardware configuration instruction and an electronic apparatus (100). The method for dynamically adjusting hardware configuration instructions is adapted to the electronic apparatus including a basic input-output system (BIOS) device (110) and a hardware device (120). The method includes the following steps. A binary raw data file (F1) is generated according to a hardware configuration instruction set of the hardware device, wherein the hardware configuration instruction set includes at least one hardware configuration instruction. The binary raw data file is written to BIOS variable storage space (31) of the BIOS device. By executing BIOS code (B1), the hardware configuration instruction in the binary raw data file is read from the BIOS variable storage space. By executing the BIOS code, the hardware configuration instruction read from the BIOS variable storage space is written into a register (R1) of the hardware device.

## Description

### BACKGROUND

### Technical Field

The disclosure relates to an electronic apparatus, and particularly relates to a method for dynamically adjusting hardware configuration instruction and an electronic apparatus.

### Description of Related Art

Basic input-output system (BIOS) is firmware that is loaded into a computer device when powered on before the computer runs the operating system. The BIOS checks the hardware of the computer device and performs hardware initialization, and the BIOS provides runtime services to the operating system, such as power management or hardware configuration.

During the BIOS boot process, it is usually necessary to issue various hardware configuration instructions to the register of some hardware devices. When the hardware designs of the computer device are different, the hardware configuration instructions of the hardware devices also need to be changed corresponding to the hardware designs of the computer device. For example, due to differences in the design of the pin widgets of different motherboards, the hardware configuration instructions for the audio processor has to be filled out with different content. Currently, the hardware configuration instruction set of the hardware device is generally recorded in the BIOS code, and is compiled and burned into the BIOS device. However, when the need to change the hardware configuration instruction set arises, developers need to re-program or refresh the BIOS device, which is relatively inconvenient and time-consuming. Especially, when developers need to test the hardware device in the computer device, it is quite a waste of time to repeatedly burn or update the BIOS device.

### SUMMARY

In view of the above, the disclosure proposes a method for dynamically adjusting hardware configuration instruction and an electronic apparatus, which can solve the foregoing technical problems.

Embodiments of the disclosure provide a method for dynamically adjusting hardware configuration instruction, which is suitable for an electronic apparatus including a basic input-output system (BIOS) device and a hardware device. The method includes the following steps. A binary raw data file is generated according to a hardware configuration instruction set of the hardware device, in which the hardware configuration instruction set includes at least one hardware configuration instruction. The binary raw data file is written to a BIOS variable storage space of the BIOS device. By executing BIOS code, the hardware configuration instruction in the binary raw data file is read from the BIOS variable storage space. By executing the BIOS code, the hardware configuration instruction read from the BIOS variable storage space is written to a register of the hardware device.

Embodiments of the disclosure provide an electronic apparatus, which includes a BIOS device, a hardware device, and a processor. The processor is coupled to the BIOS device and the hardware device, and is configured to perform the following operations. A binary raw data file is generated according to a hardware configuration instruction set of the hardware device, in which the hardware configuration instruction set includes at least one hardware configuration instruction. The binary raw data file is written to a BIOS variable storage space of the BIOS device. By executing BIOS code, the hardware configuration instruction in the binary raw data file is read from the BIOS variable storage space. By executing the BIOS code, the hardware configuration instruction read from the BIOS variable storage space is written to a register of the hardware device.

Based on the above, in the embodiments of the disclosure, the hardware configuration instruction is written to the BIOS variable storage space, and the hardware configuration instruction recorded in the BIOS variable storage space is written to the register of the hardware device by executing the BIOS code. Based on the above, developers can independently update the hardware configuration instructions required by the hardware device without re-burning the BIOS device, thereby significantly saving testing time for testing hardware components.

### BRIEF DESCRIPTION OF THE DRAWINGS

FIG. 1 is a block diagram of an electronic apparatus according to an embodiment of the disclosure.
FIG. 2 is a flow chart of a method for dynamically adjusting hardware configuration instruction according to an embodiment of the disclosure.
FIG. 3 is a schematic diagram of the method for dynamically adjusting hardware configuration instruction according to an embodiment of the disclosure.
FIG. 4 is a flow chart of writing a binary raw data file to a basic input-output system (BIOS) variable storage space according to an embodiment of the disclosure.
FIG. 5 is a flow chart of writing a hardware configuration instruction to a register of a hardware device according to an embodiment of the disclosure.

### DESCRIPTION OF THE EMBODIMENTS

Some embodiments of the disclosure will be described in detail with reference to the accompanying drawings. The reference signs cited in the following description will be regarded as the same or similar components when the same reference signs appear in different drawings. The embodiments are merely part of the disclosure and do not disclose all possible implementations of the disclosure. Rather, the embodiments are merely examples of the method and the apparatus within the scope of the patent application of the disclosure.

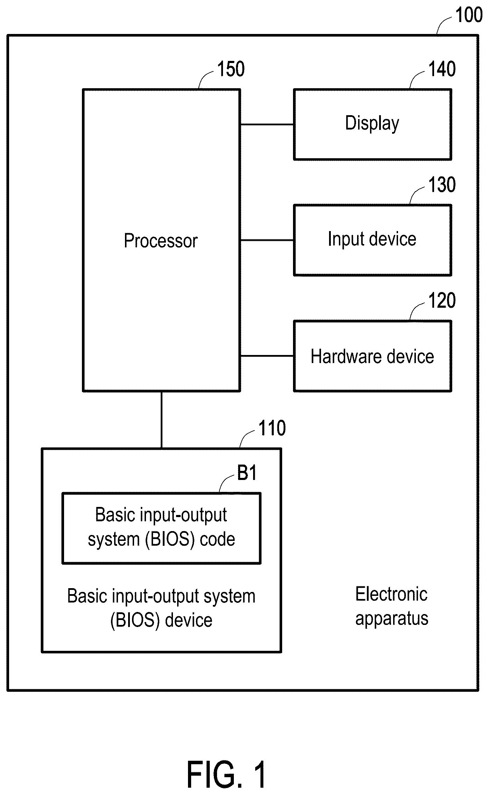

FIG. 1 is a block diagram of an electronic apparatus according to an embodiment of the disclosure. Referring to FIG. 1, an electronic apparatus 100 is a computer device with a basic input-output system (BIOS), such as a notebook computer or a desktop computer. The electronic apparatus 100 may include a BIOS device 110, a hardware device 120, an input device 130, a display 140, and a processor 150. The processor 150 is coupled to the BIOS device 110, the output device 130, and the input device 140.

The BIOS device 110 is recorded with BIOS code B1. The BIOS code B1 is the code that is first executed after the electronic apparatus 100 is started. In some embodiments, the BIOS device 110 may be, for example, an electrically-erasable programmable read-only memory (EEPROM). In some other embodiments, the BIOS device 110 may be, for example, a flash memory. From another point of view, the BIOS device 110 may be a chip storing system firmware such as the BIOS code B1. When the electronic apparatus 100 is powered on, the BIOS code B1 is executed to initialize and detect various hardware devices on the electronic apparatus 100.

In addition, in some embodiments, the electronic apparatus 100 may further include a system memory (not shown), and the system memory may be, for example, any type of volatile random access memory (RAM).

The hardware device 120 includes a register for recording a hardware configuration instruction set. In an embodiment, the hardware device 120 may be an audio processor (also referred to as an audio codec). Alternatively, in another embodiment, the hardware device 120 may be an embedded controller (EC). During the boot process of the electronic apparatus 100, the BIOS code B1 writes one or more hardware configuration instructions in the hardware configuration instruction set to the register of the hardware device 120.

The input device 130 is used to receive user commands input by the user. The input device 130 may be, for example, a keyboard, a mouse, or a touch device, and the disclosure is not limited thereto.

The display 140 is used to display information, a setting interface, and an operation interface. In different embodiments, the display 140 may be, for example, a liquid crystal display (LCD), a light emitting diode (LED) display, an organic light emitting diode (OLED) display, but the disclosure is not limited thereto.

The processor 150 is, for example, a central processing unit (CPU), an application processor (AP), or other programmable general-purpose or special-purpose microprocessors, a digital signal processor (DSP), or other similar devices, integrated circuits, and combinations thereof. The processor 150 may access and execute the program codes, codes, or instructions recorded in the BIOS device 110 and the system memory to implement the method for dynamically adjusting hardware configuration instruction in the embodiments of the disclosure.

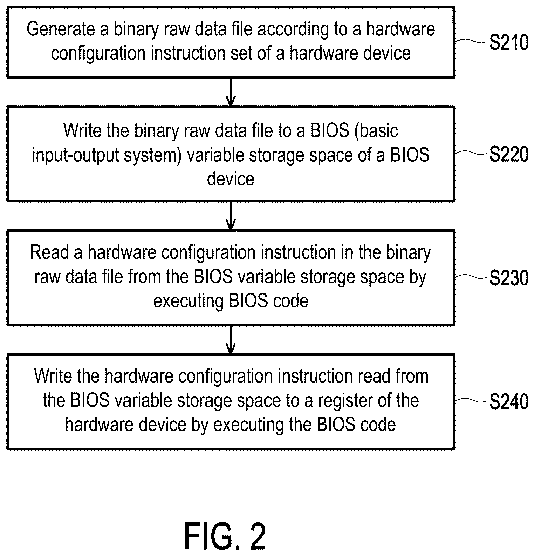

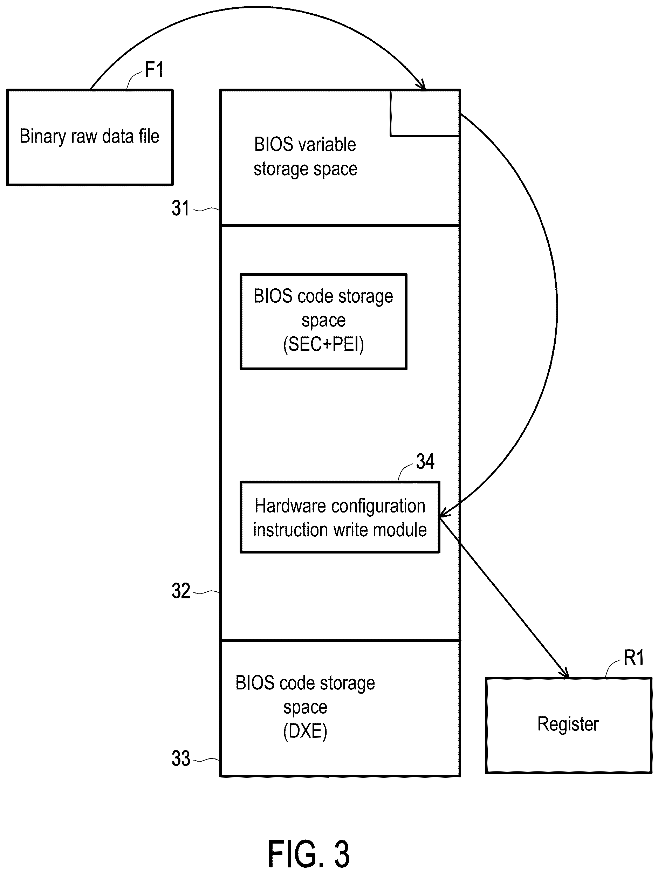

FIG. 2 is a flow chart of the method for dynamically adjusting hardware configuration instruction according to an embodiment of the disclosure, and the method flow of FIG. 2 may be implemented by the electronic apparatus 100 of FIG. 1. Please refer to FIG. 1 to FIG. 2. The following is a description of the steps of the method for dynamically adjusting hardware configuration instruction in this embodiment together with various components of the electronic apparatus 100 in FIG. 1. In addition, in order to clearly illustrate the disclosure, the following description will be supplemented with FIG. 3.

In Step S210, the processor 150 generates a binary raw data file F1 according to the hardware configuration instruction set of the hardware device 120. The hardware configuration instruction set may include at least one hardware configuration instruction.

In some embodiments, the hardware device 120 may be an audio processor, and the hardware configuration instruction set may include a Verb-table of the audio processor. The Verb-table is a command sequence used to configure and control the audio processor. The Verb-table includes at least one hardware configuration instruction written to a register R1 of the hardware device 120. Alternatively, in some embodiments, the hardware device 120 may be an embedded controller, and the hardware configuration instruction set may include a thermal table for controlling the fan.

In some embodiments, the processor 150 may define a file format of the binary raw data file F1. Specifically, based on subsequent operations, the binary raw data file F1 needs to be written to a BIOS variable storage space 31 of the BIOS device. The file format of the binary raw data file F1 may be defined according to the requirements of a unified extensible firmware interface tool (UEFI tool). For example, a file extension of the binary raw data file F1 may be ".bin". Then, the processor 150 may convert the hardware configuration instruction set of the hardware device 120 into the binary raw data file F1 according to the file format of the binary raw data file F1. In some embodiments, the processor 150 may execute tools under the Windows operating system to generate the binary raw data file F1. For example, the processor 150 may convert the hardware configuration instruction set of the hardware device 120 into the binary raw data file F1 through a programming language (such as C language) or a command line tool.

In Step S220, the processor 150 writes the binary raw data file F1 to the BIOS variable storage space 31 of the BIOS device 110. In some embodiments, the processor 150 may write the data in the binary raw data file F1 to the BIOS variable storage space 31 of the BIOS device 110 through the UEFI tool. Specifically, since the file format of the binary raw data file F1 is defined in advance, the processor 150 may parse the hardware configuration instruction in the binary raw data file F1 and write the hardware configuration instruction in the binary raw data file F1 to the BIOS variable storage space 31.

In some embodiments, the BIOS variable storage space 31 includes a non-volatile random access memory (NVRAM) space of the BIOS device 110. The NVRAM space of the BIOS device 110 is readable and writable, and may be regarded as a specific storage area in the BIOS device 110. Generally speaking, the NVRAM space of the BIOS device 110 may be used to store some BIOS variables, system variables, or user settings.

Specifically, please refer to FIG. 3. The storage space of the BIOS device 110 may include the BIOS variable storage space 31 and BIOS code storage spaces 32 and 33. The BIOS variable storage space 31 is used to record BIOS variables or system variables. The BIOS code storage spaces 32 and 33 are used to record the compiled BIOS code B1. In other words, the BIOS code storage spaces 32 and 33 may be used to record BIOS image files. For example, the BIOS code storage space 32 is used to record the codes of the SEC phase and PEI phase in the power-on self-test (POST) procedure. The BIOS code storage space 33 is used to record the code of the DXE phase in the POST procedure. In some embodiments, the binary raw data file F1 may be written to the BIOS variable storage space 31 of the BIOS device 110 through the UEFI tool. For example, the processor 150 may execute a file with the extension ".efi" and write the binary data in the binary raw data file F1 to the BIOS variable storage space 31. In some embodiments, the binary raw data file F1 includes at least one hardware configuration instruction, and each hardware configuration instruction has a corresponding instruction index.

In Step S230, after the electronic apparatus 100 is powered on, by executing the BIOS code B1, the processor 150 reads the hardware configuration instruction in the binary raw data file F1 from the BIOS variable storage space 31. In some embodiments, after the electronic apparatus 100 is powered on, the processor 150 starts executing the BIOS code B1. When the processor 150 executes a hardware configuration instruction write module 34 in the BIOS code B1, the processor 150 may read the hardware configuration instruction in the binary raw data file F1 from the BIOS variable storage space 31.

In Step S240, by executing the BIOS code B1, the processor 150 writes the hardware configuration instruction read from the BIOS variable storage space 31 to the register R1 of the hardware device 120. In some embodiments, the register R1 of the hardware device 120 may be a configuration default register. As shown in FIG. 3, the hardware configuration instruction write module 34 may be recorded in the BIOS code storage space 32. When the processor 150 executes the hardware configuration instruction write module 34 in the BIOS code B1, the processor 150 may write the hardware configuration instruction read from the BIOS variable storage space 31 to the register R1. The hardware configuration instruction may be written to the register R1 of the hardware device 120 during the PEI phase of the POST procedure.

Based on the above, compared with the traditional method of recording the hardware configuration instruction set of the hardware device 120 in the BIOS code, the embodiment of the disclosure records the hardware configuration instruction set of the hardware device 120 in the readable and writable BIOS variable storage space 31. Therefore, the embodiment of the disclosure can independently update the hardware configuration instruction set of the hardware device 120 while the system is executing without re-burning the BIOS device 110.

The following will describe embodiments of writing the binary raw data file F1 to the BIOS variable storage space 31 and writing the hardware configuration instruction to the register R1 of the hardware device 120 respectively.

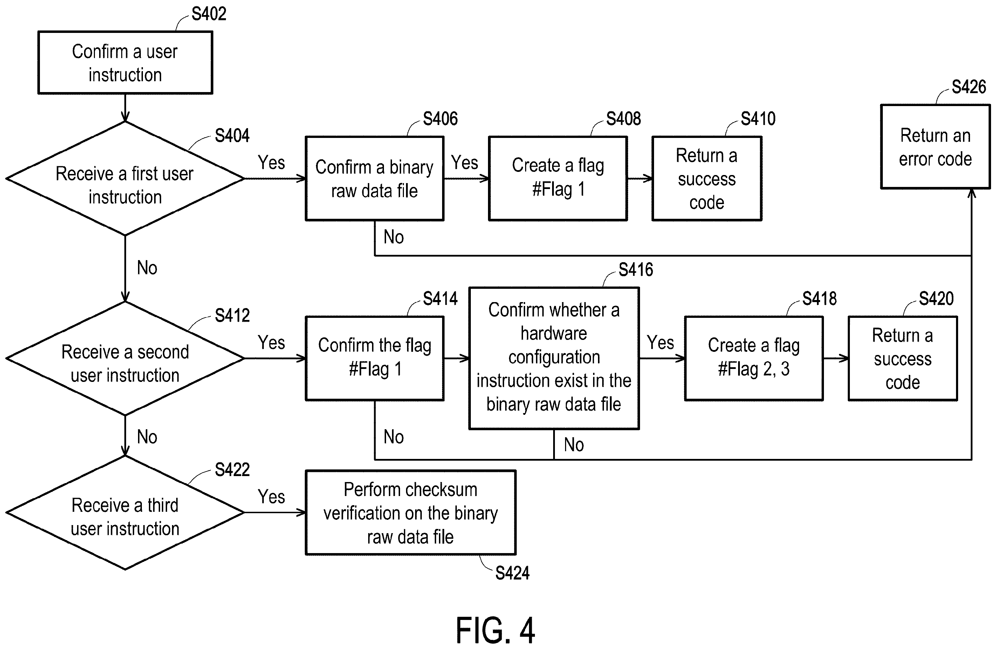

FIG. 4 is a flow chart of writing the binary raw data file to the BIOS variable storage space according to an embodiment of the disclosure, and the method flow of FIG. 4 may be implemented by the electronic apparatus 100 of FIG. 1. Please refer to FIG. 1 and FIG. 4. The following is a description of the steps of this embodiment together with various components of the electronic apparatus 100 in FIG. 1.

It should be noted that, in some embodiments, each step shown in FIG. 4 may be implemented by the processor 150 executing a file with the extension name ".efi". In Step S402, the processor 150 confirms the user instruction input by the user in the setting interface (such as the BIOS setting interface). For example, users may issue user instructions through the command line or command options of the setting interface.

In Step S404, the processor 150 determines whether a first user instruction is received through the setting interface. The first user instruction is used to indicate the instruction index of the hardware configuration instruction to be updated. If Step S404 determines yes, then in Step S406, in response to receiving the first user command through the UEFI tool, the processor 150 verifies whether the binary raw data file includes at least one instruction index indicated by the first user command.

If Step S406 determines yes, then in Step S408, in response to the binary raw data file including at least one instruction index indicated by the first user command, the processor 150 creates a flag #Flag 1 equal to a default value. The default value is, for example, 1, and the flag #Flag 1 is recorded in the BIOS variable storage space of the BIOS device 110. In Step S410, the processor 150 reports a success code. If Step S406 determines no, then in Step S426, the processor 150 returns an error code.

If Step S404 determines no, then in Step S412, the processor 150 determines whether a second user instruction is received through the setting interface. If Step S412 determines yes, then in Step S414, in response to receiving the second user command through the UEFI tool, the processor 150 determines whether the flag #Flag 1 is equal to the default value.

If Step S414 determines yes, then in Step S416, in response to the flag #Flag 1 being equal to the default value, the processor 150 confirms whether the hardware configuration instruction corresponding to at least one instruction index exists in the binary raw data file. If Step S414 or Step S416 determines no, then in Step S426, the processor 150 returns the error code.

If Step S416 determines yes, then in Step S418, in response to the hardware configuration instruction corresponding to at least one instruction index existing in the binary raw data file, the processor 150 creates a flag #Flag 2 and a flag #Flag 3 associated with the storage location of the hardware configuration instruction. Also, in response to the hardware configuration instruction corresponding to at least one instruction index existing in the binary raw data file, the processor 150 writes the hardware configuration instruction corresponding to the at least one instruction index to the BIOS variable storage space of the BIOS device 110. In Step S420, the processor 150 reports the success code.

If Step S412 determines no, then in Step S422, the processor 150 determines whether to receive a third user instruction. If Step S422 determines yes, then in Step S424, the processor 150 performs checksum verification on the binary raw data file to verify whether the binary raw data file recorded in the BIOS variable storage space is complete and correct.

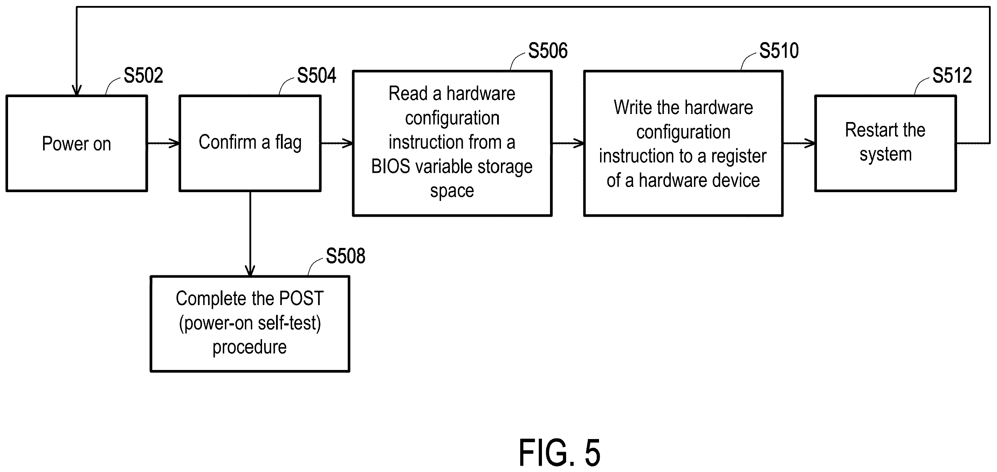

FIG. 5 is a flow chart of writing the hardware configuration instruction to the register of the hardware device according to an embodiment of the disclosure, and the method flow of FIG. 5 may be implemented by the electronic apparatus 100 of FIG. 1. Please refer to FIG. 1 and FIG. 5. The following is a description of the steps of this embodiment together with various components of the electronic apparatus 100 in FIG. 1.

In Step S502, the electronic apparatus 100 is powered on. In Step S504, by executing the BIOS code B1, the processor 150 confirms the flag #Flag 1. In Step S508, in response to the flag #Flag 1 being not equal to the default value or not existing, the processor 150 completes the POST procedure. In addition, in Step S506, in response to the flag #Flag 1 being equal to the default value, the processor 150 reads the hardware configuration instruction in the binary raw data file from the BIOS variable storage space. For example, the processor 150 may call a hook function to read the hardware configuration instruction recorded in the BIOS variable storage space. The processor 150 may read the hardware configuration instruction recorded in the BIOS variable storage space according to the flag #Flag 2 and the flag #Flag 3 associated with the storage location of the hardware configuration instruction. According to the process in FIG. 4, when the binary raw data file includes at least one instruction index indicated by the first user command, the processor 150 creates the flag #Flag 1 equal to the default value. When the binary raw data file includes the hardware configuration instruction specified by the user, the processor 150 creates the flag #Flag 2 and the flag #Flag 3 associated with the storage location of the hardware configuration instruction. In Step S510, by executing the BIOS code B1, the processor 150 writes the hardware configuration instruction recorded in the BIOS variable storage space to the register of the hardware device 120. In Step S512, the processor 150 restarts the electronic apparatus 100.

In summary, in the embodiments of the disclosure, the hardware configuration instruction is written to the BIOS variable storage space, and the hardware configuration instruction recorded in the BIOS variable storage space is written to the register of the hardware device by executing the BIOS code. Based on the above, developers can independently update the hardware configuration instructions required by the hardware device without re-burning the BIOS device or recompiling the BIOS code, thereby significantly saving testing time for testing hardware components.

## Claims

1. A method for dynamically adjusting hardware configuration instruction, suitable for an electronic apparatus (100) comprising a basic input-output system (BIOS) device (110) and a hardware device (120), wherein the method comprises:
generating a binary raw data file (F1) according to a hardware configuration instruction set of the hardware device (120), wherein the hardware configuration instruction set comprises at least one hardware configuration instruction;
writing the binary raw data file (F1) to a BIOS variable storage space (31) of the BIOS device (110);
reading the hardware configuration instruction in the binary raw data file (F1) from the BIOS variable storage space (31) by executing BIOS code (B1); and
writing the hardware configuration instruction read from the BIOS variable storage space (31) to a register (R1) of the hardware device (120) by executing the BIOS code (B1).

2. The method for dynamically adjusting hardware configuration instruction as claimed in claim 1, wherein the BIOS variable storage space (31) comprises a non-volatile random access memory (NVRAM) space of the BIOS device (110).

3. The method for dynamically adjusting hardware configuration instruction as claimed in claim 1, wherein reading the hardware configuration instruction in the binary raw data file (F1) from the BIOS variable storage space (31) by executing the BIOS code (B1) comprises:
confirming a flag (#Flag 1);
reading the hardware configuration instruction in the binary raw data file (F1) from the BIOS variable storage space (31) in response to the flag (#Flag 1) being equal to a default value; and
completing a power-on self-test (POST) procedure in response to the flag (#Flag 1) being not equal to the default value or not existing.

4. The method for dynamically adjusting hardware configuration instruction as claimed in claim 3, wherein after writing the hardware configuration instruction read from the BIOS variable storage space (31) to the register (R1) of the hardware device (120) by executing the BIOS code (B1), the method comprises:
restarting the electronic apparatus (100).

5. The method for dynamically adjusting hardware configuration instruction as claimed in claim 3, wherein the binary raw data file (F1) is written to the BIOS variable storage space (31) of the BIOS device (110) through a unified extensible firmware interface tool (UEFI tool).

6. The method for dynamically adjusting hardware configuration instruction as claimed in claim 5, wherein writing the binary raw data file (F1) to the BIOS variable storage space (31) of the BIOS device (110) comprises:
verifying whether the binary raw data file (F1) comprises at least one instruction index indicated by a first user command in response to receiving the first user command through the UEFI tool; and
creating the flag (#Flag 1) equal to the default value in response to the binary raw data file (F1) comprising the at least one instruction index indicated by the first user command.

7. The method for dynamically adjusting hardware configuration instruction as claimed in claim 6, wherein writing the binary raw data file (F1) to the BIOS variable storage space (31) of the BIOS device (110) further comprises:
determining whether the flag (#Flag 1) is equal to the default value in response to receiving a second user command through the UEFI tool;
confirming whether the hardware configuration instruction corresponding to the at least one instruction index exists in the binary raw data file (F1) in response to the flag (#Flag 1) being equal to the default value; and
writing the hardware configuration instruction corresponding to the at least one instruction index to the BIOS variable storage space (31) of the BIOS device (110) in response to the hardware configuration instruction corresponding to the at least one instruction index existing in the binary raw data file (F1).

8. The method for dynamically adjusting hardware configuration instruction as claimed in claim 1, wherein the hardware device (120) comprises an audio processor, and the hardware configuration instruction set comprises a Verb-table of the audio processor.

9. The method for dynamically adjusting hardware configuration instruction as claimed in claim 1, wherein generating the binary raw data file (F1) according to the hardware configuration instruction set of the hardware device (120) comprises:
defining a file format of the binary raw data file (F1); and
converting the hardware configuration instruction set of the hardware device (120) into the binary raw data file (F1) according to the file format of the binary raw data file (F1).

10. The method for dynamically adjusting hardware configuration instruction as claimed in claim 1, wherein the hardware configuration instruction is written to the register (R1) of the hardware device (120) during a PEI phase of the POST procedure.

11. An electronic apparatus (100), comprising:
a BIOS device (110) recorded with BIOS code (B1);
a hardware device (120); and
a processor (150) coupled to the BIOS device (110) and the hardware device (120), and configured to perform the method according to any one of claims 1 to 10.
